# EUROPEAN PATENT APPLICATION

(11) **EP 1 441 550 A1**
(43) Date of publication of application: **28.07.2004**
(21) Application number: 04250249.2
(22) Date of filing: 19.01.2004
(51) Int. Cl.: H04Q 7/18, H04Q 7/32

(54) **Synchronisation of a wireless communication device to a master device**

(30) Priority: 24.01.2003 JP 2003016080
(71) Applicant: Seiko Instruments Inc., Chiba-shi, Chiba (JP)
(72) Inventor: Tsuji, Tomoharu Seiko Instruments Inc., Chiba-shi Chiba (JP)
(74) Representative: Sturt, Clifford Mark

(57) **Abstract**

A data transmission system for transmitting data among a plurality of electronic apparatuses each having a communication function, in which power consumption of the electronic apparatuses can be reduced, and data transmission among the electronic apparatuses can be surely carried out. In a communication standby state, an information processing unit transmits a synchronous signal at given intervals of X seconds, a biological information processing unit has a reception period corresponding to a timing synchronous with the synchronous signal, and the information processing unit and the biological information processing unit are synchronized with each other. In this state, after the information processing unit transmits a data request signal (ASK), the biological information processing unit transmits data (Log1 to Log3) which have respective predetermined lengths and which are obtained through a division process. After the end of the data transmission, the operation state returns back to the communication standby state again, in which the information processing unit and the biological information processing unit are synchronized with each other.

## Description

The present invention relates to a data transmission system for transmitting data among a plurality of electronic apparatuses each having a communication function, and a wearable communication device suitable for the data transmission system.

Heretofore, a data transmission system for transmitting data among a plurality of electronic apparatuses each having a communication function has been utilized in various kinds of fields (refer to JP 05-191391A and JP 11-331961A for example).

In a data transmission system for transmitting biological information such as a pulse rate in the form of data in a wireless manner, a wearable communication device (master device) worn on the body is configured so as to receive and collect biological data such as a pulsation from a plurality of sensor devices (slave devices) worn on the body, and transmits the data thus collected to an information processing unit constituted by a computer.

The wearable communication device, when transmitting data to the information processing unit, sets an operation mode of the wearable communication device to a specific link mode to thereby establish a link with the information processing unit in order to transmit the data. As a result, the data is uploaded fromthe wearable communication device to the information processing unit, and the information processing unit can execute various kinds of processings such as data analysis.

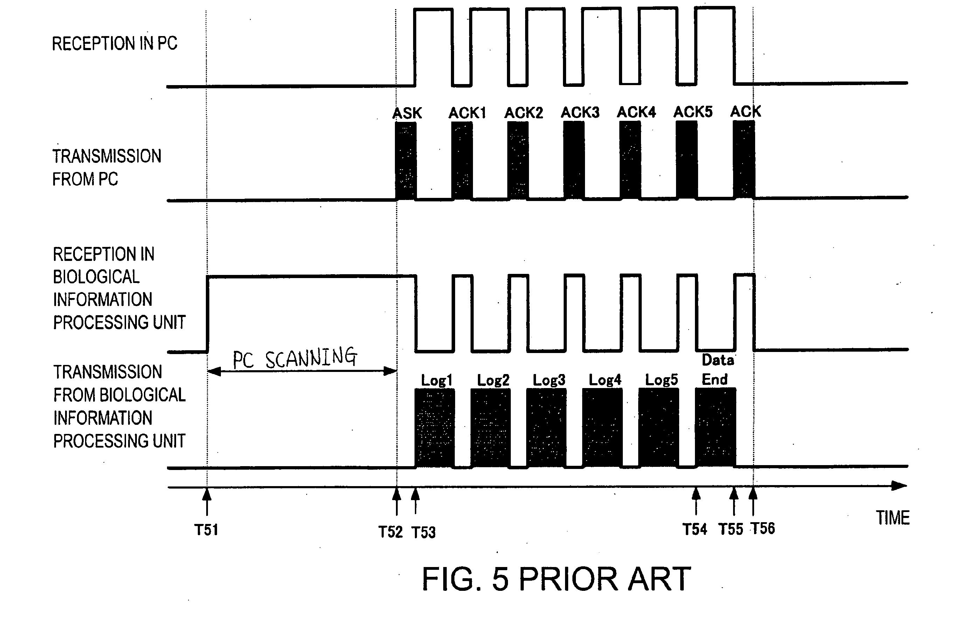

Fig. 5 is a timing chart showing an operation when data is transmitted from a wearable communication device worn on the body to an information processing unit in a conventional data transmission system for transmitting biological information in a wireless manner.

In Fig. 5, a biological information processing unit serving as the wearable communication device, when transmitting data to an information processing unit (PC) constituted by a computer, starts a scanning operation for detection of a message from the information processing unit at a time instant T51.

When the information processing unit transmits a data request signal ASK at a time instant T52, the biological information processing unit receives the data request signal ASK, and then transmits data Log1 having a predetermined time length of data stored in a memory of the biological information processing unit at a time instant T53 to the information processing unit. Then, the information processing unit receives the data Log1 and then transmits a verification signal ACK1 to the biological information processing unit.

Then, the biological information processing unit receives the verification signal ACK1 transmitted fromthe information processing unit, and transmits data Log2 having a predetermined length following the data Log1 to the information processing unit. Then, the information processing unit receives the data Log:2, and transmits a verification signal ACK2 to the biological information processing unit.

The biological information processing unit and the information processing unit repeatedly carry out the above-mentioned operation. Then, after the biological processing unit ends the transmission of,all the data, the biological processing unit transmits a data transmission end signal (DATA END) to the information processing unit at a time instant T54. After the information processing unit receives the data transmission end signal (DATA END) , the information processing unit transmits a verification signal ACK to the biological processing unit to end a data reception processing at a time instant T55. The biological information processing unit receives the verification signal ACK, and after judging that the information processing unit has received all the data, ends a data transmission processing at a time instant T56. In a manner as described above, it becomes possible to transmit the data from the biological information processing unit to the information processing unit.

However, in a case where the data is transmitted from the wearable communication device to the information processing unit, since it is necessary to set the information processing unit to a mode for a link before the start of the data transmission, a complicated work is required.

In addition, in the communication established between the wearable communication device and the information processing unit, since the information processing unit is a master device, the wearable communication device needs to always wait for a communication start trigger (the data request signal ASK in Fig. 5) sent from the information processing unit. For this reason, there is encountered a problem that the power consumption in the wearable communication device becomes large because it is necessary to always keep a reception port open.

In addition, since the wearable communication device is a portable electronic device, a battery is used as a power supply. Thus, if the power consumption in the wearable communication device becomes large as described above, the link with the information processing unit cannot be continued for a long time. Consequently, when there is a long period of time where no communication is carried out (i.e., when the idle time ranging from the time instant T51 to the time instant T52 is long), the link with the information processing unit needs to be released once in order to reduce the power consumption. In this case, when the data is intended to be transmitted from the wearable communication device to the information processing unit, the link with the information processing unit is already released, and the data may not be transmitted.

It is an object of the present invention to provide a data transmission system for transmitting data among a plurality of electronic apparatuses each having a communication function, in which power consumption of the electronic apparatuses can be reduced, and data transmission among the electronic apparatuses can be surely carried out.

Another object of the present invention is to provide a wearable communication device suitable for the data transmission system.

According to the present invention, there is provided a data transmission system for transmitting data between first and second electronic apparatuses each having a communication function, the data transmission system being characterized in that the first electronic apparatus transmits a synchronous signal at given intervals, and the second electronic apparatus has reception periods synchronous with the respective synchronous signals, and receives the synchronous signal for each of the reception periods. The first electronic apparatus transmits a synchronous signal at given intervals. The second electronic apparatus has reception periods synchronous with the respective synchronous signals, and receives the synchronous signal for each of the reception periods.

Here, the data transmission system may be structured such that the second electronic apparatus includes communication means for transmitting and receiving a signal in a wireless manner, and storage means for storing therein at least identification information, and the communication means, when receiving the synchronous signal containing therein the identification information stored in the storage means, sets in itself a reception period corresponding to a timing synchronous with the synchronous signal.

Further, the data transmission system may be structured such that the communication means, when receiving the synchronous signal by carrying out a scanning operation continuous in terms of time, sets in itself a reception period corresponding to a timing synchronous with the synchronous signal.

Further, the data transmission system may be structured such that the communication means, when receiving the synchronous signal by carrying out a scanning operation plural times at given intervals, sets in itself a reception period corresponding to a timing synchronous with the synchronous signal.

Further, the data transmission system may be structured such that the first electronic apparatus transmits a data request signal at a timing synchronous with the synchronous signal, and the storage means of the second electronic apparatus stores data to be transmitted, and the communication means, in response to the data request signal received for the reception period, transmits the data stored in the storage means.

Further, the data transmission system may be structured such that the first electronic apparatus, after receiving a data transmission end signal transmitted from the second electronic apparatus and then transmitting a verification signal to the second electronic apparatus, transmits the synchronous signal at the given intervals, and the communication means of the second electronic apparatus, after end of the transmission of the data, transmits the data transmission end signal, and after receiving the verification signal, sets in itself the reception period synchronous with the synchronous signal.

Further, according to the present invention, there is provided a wearable communication device, including: communication means for transmitting and receiving a signal in a wireless manner; and storage means for storing therein at least identification information, the wearable communication device being characterized in that the communication means, when receiving the synchronous signal containing therein the identification information stored in the storage means, sets in itself a reception period corresponding to a timing synchronous with the synchronous signal. The communication means, when receiving the synchronous signal containing therein the identification information stored in the storage means, sets in itself a reception period corresponding to a timing synchronous with the synchronous signal.

Here, the wearable communication device may be structured such that the communication means, when receiving the synchronous signal by carrying out a scanning operation continuous in terms of time, sets in itself a reception period corresponding to a timing synchronous with the synchronous signal.

Further, the wearable communication device may be structured such that the communication means, when receiving the synchronous signal by carrying out a scanning operation plural times at given intervals, sets in itself a reception period corresponding to a timing synchronous with the synchronous signal.

Further, the wearable communication device may be structured such that the storage means stores data to be transmitted, and the communication means, in response to the data request signal received for the reception period, transmits the data stored in the storage means.

Further, the wearable communication device may be structured such that the communication means, after end of the transmission of the data, transmits the data transmission end signal, and after receiving the verification signal, sets in itself the reception period synchronous with the synchronous signal.

Embodiments of the invention will now be described by way of further example only and with reference to the accompanying drawings, in which:
Fig. 1. is a block diagram of a portable biological information processing system according to an embodiment mode of the present invention;
Fig. 2 is a timing chart showing a synchronization operation of a portable biological information processing system according to a first embodiment mode of the present invention;
Fig. 3 is a timing chart showing a synchronization operation of a portable biological information processing system according to a second embodiment mode of the present invention;
Fig. 4 is a timing chart showing a data transmission operation of the portable biological information processing system according to the embodiment mode of the present invention; and
Fig. 5 is a timing chart showing a data transmission operation of a conventional portable biological information processing system.

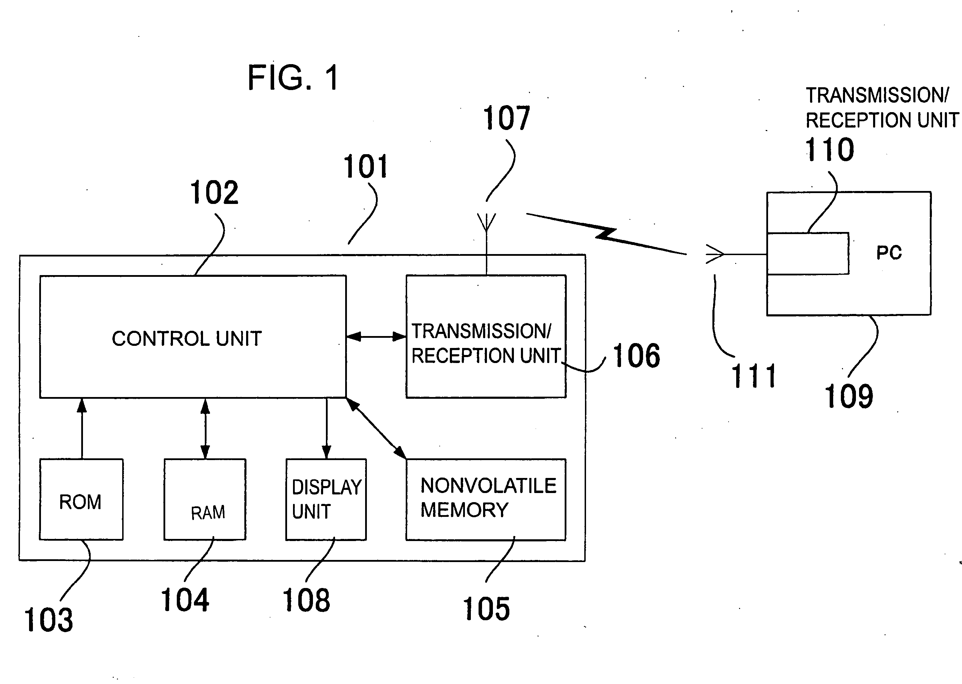

Fig. 1 is a block diagram of a data transmission system according to an embodiment mode of the present invention. In Fig. 1, there is shown an example of a portable biological information processing system for transmitting data such as biological information in a wireless manner from a portable biological information processing unit 101 to an information processing unit (PC) 109 constituted by a computer.

Note that, while not illustrated in Fig. 1, the biological information processing unit 101 is configured so as to receive biological data such as pulsations of the human body detected by a plurality of biological information detectors worn on the human body in a wireless manner in accordance with a TDMA method and to transmit the biological data thus received to the information processing unit 109. The biological information processing unit 101 may be configured so as to be installed in a predetermined place, or may also be configured so as to be worn on an arm or the like of a user. In the latter case, the biological information processing unit 101 serves as a wearable communication device.

In Fig. 1, the biological information processing unit 101 serving as a second electronic device having a communication function includes a control unit 102, a read only memory (ROM) 103, a random access memory (RAM) 104, a nonvolatile memory 105, a transmission/reception unit 106 constituting communication means together with the control unit 102, an antenna 107, and a display unit 108.

The control unit 102 is constituted by a central processing unit (CPU). The control unit 102 executes a programpreviously stored in the ROM 103 to thereby execute various kinds of processings such as a processing for displaying biological data received from the plurality of biological information detectors (not shown) to be stored in the RAM 104 on the display unit 108 and a processing for transmitting the biological data stored in the RAM 104 to the information processing unit 109 through the transmission/ reception unit 106.

The RAM 104 stores the biological information received from the plurality of biological information detectors. The nonvolatile memory 105 stores identification codes previously given to the respective biological information detectors, and identification information given to the information processing unit 109. The ROM 103, the RAM 104 and the nonvolatile memory 105 constitute storage means.

The information processing unit 109 serving as a first electronic device having a communication function is constituted by a portable or stationary computer, and includes a transmission/reception unit 110 serving as communication means and an antenna 111.

The information processing unit 109 receives the biological data as the data to be transmitted of the plurality of biological information detectors stored in the RAM 104 from the biological information processing unit 101 through the antenna 111 and the transmission/reception unit 110. The information processing unit 109 then executes various kinds of processings such as a processing for displaying the biological data, and a comparison processing.

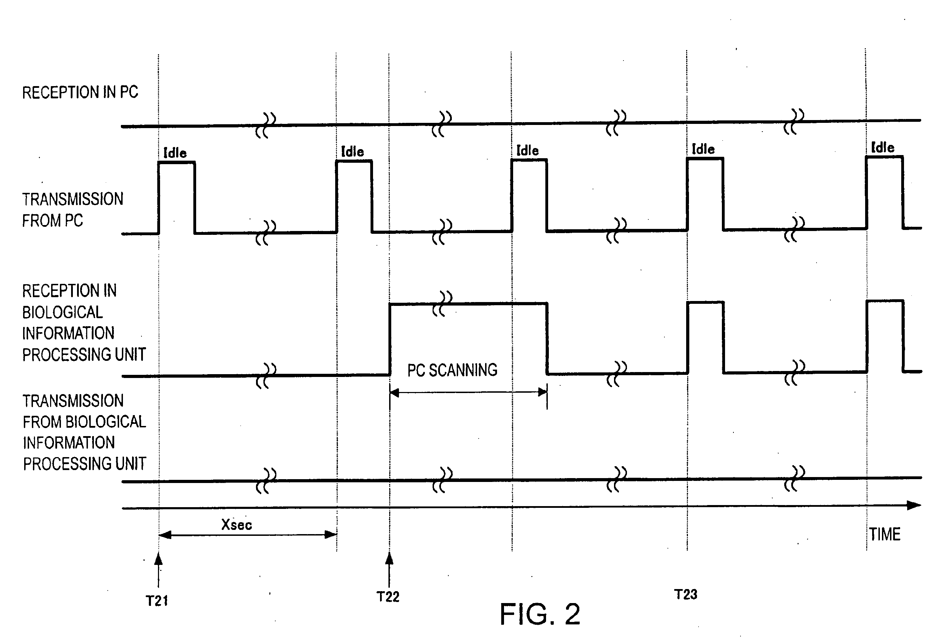

Fig. 2 is a chart showing a signal transmission timing according to a first embodiment mode of the portable biological information processing system shown in Fig. 1. It is a timing chart showing a processing when the biological information processing unit 101 and the information processing unit 109 are synchronized in communication with each other.

In Fig. 2, when the information processing unit 109 activates an application software for transmission/reception of data at a time instant T21, the information processing unit 109 starts to transmit a synchronous signal (idle) at given intervals of X seconds (e.g., 1 second). The synchronous signal is a signal containing therein an identification code specific to the information processing 'unit 109 and also containing therein information that it is a synchronous signal.

When the transmission/reception unit 106 of the biological information processing unit 101 receives the synchronous signal by carrying out a scanning operation (PC scanning) continuous in terms of time at a time instant T22, the transmission/reception unit 106 sets in itself a reception period corresponding to a timing synchronous with the synchronous signal. Then, the transmission/reception unit 106 sets in itself the intervals between the reception periods to X seconds, the same as the intervals between the synchronous signals. As a result, the synchronous signal is synchronized with the reception period, and hence the transmission/reception unit 106 receives the synchronous signal transmitted from the information processing unit 109 for each of the reception periods.

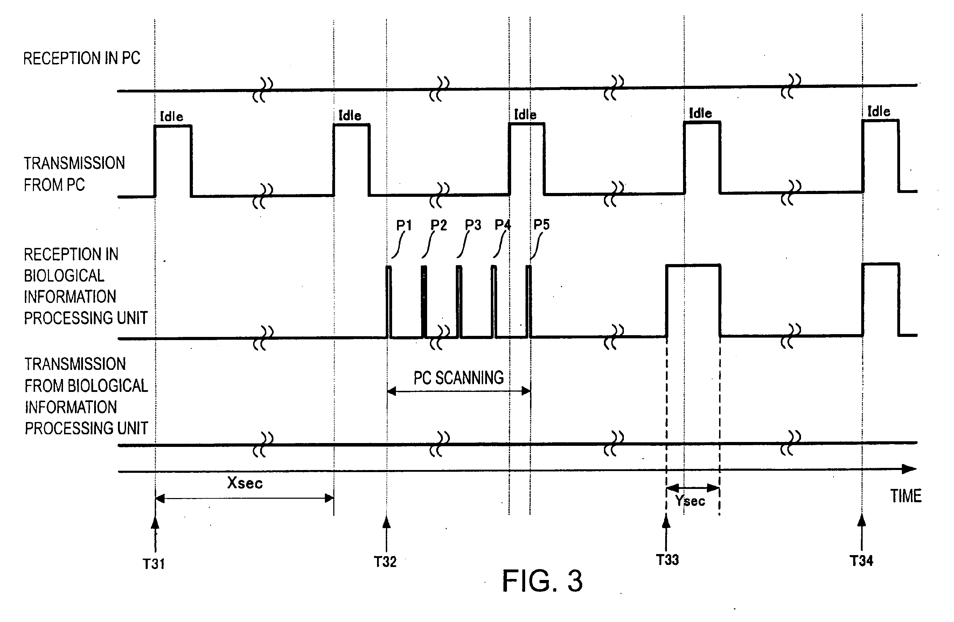

Fig. 3 is a chart showing a signal transmission timing according to a second embodiment mode of the portable biological information processing system shown in Fig. 1. It is a timing chart showing a processing when the biological information processing unit' 101 and the information processing unit 109 are synchronized in communication with each other.

In Fig. 3, when the information processing unit 109 activates an application software for transmission/reception of data at a time instant T31, the information processing unit 109 starts to transmit a synchronous signal (idle) at given intervals of X seconds (e.g., 1 second). The synchronous signal is a signal containing therein an identification code specific to the information processing unit 109 and also containing therein information that it is a synchronous signal.

When the transmission/reception unit 106 of the biological information processing unit 101 receives at a time instant T32 the synchronous signal by carrying out a scanning operation (PC scanning) plural times (five times corresponding to scanning timings P1 to P5 in this embodiment mode) at the given intervals, the transmission/reception unit 106 sets in itself a reception period corresponding to a timing synchronous with the synchronous signal.

At this time, since it is not clear which position of the synchronous signal is detected at the scanning timing P5, the transmission/reception unit 106 sets in itself a maximum period of time, i.e., Y seconds, as a synchronous period, which ranges from a time point when the synchronous signal may be present up to a time point when the synchronous signal comes to an end. That is to say, at the scanning timing P5 when the synchronous signal is detected, the transmission/reception unit 106 first sets in itself a period of time, i.e., Y seconds, as a reception period, which ranges from a time point T33, which is a time instant obtained by subtracting a period (P5 - P4), which corresponds to the scanning timing, from the interval of X seconds of the synchronous signal, up to a time point when all the synchronous signals come to an end. Then, in the subsequent interval, the transmission/reception unit 106, sets a reception period starting from a time instant T34, which is the same time width as that of the synchronous signal, and which is synchronous with the synchronous signal. As a result, the transmission/reception unit 106 can set in itself a reception period synchronous with the synchronous signal, and hence receives the synchronous signal transmitted from the information processing unit 109 for each of the reception periods.

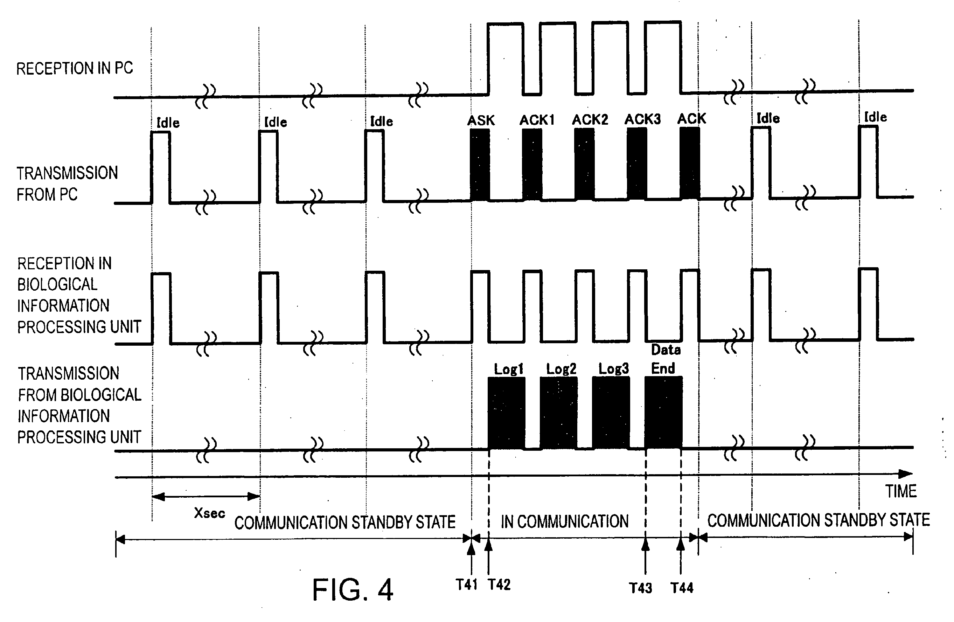

Fig. 4 is a chart showing signal transmission timings in the portable biological information processing system shown in Fig. 1. It is a timing chart showing a processing when data is transmitted between the biological information processing unit 101 and the information processing unit 109.

In Fig. 4, first of all, it is supposed that as an initial state, the biological information processing unit 101 and the information processing unit 109 are in a synchronous state. That is to say, it is supposed that the information processing unit 109 transmits a synchronous signal (idle) in a wireless manner at given intervals of X seconds to the biological information processing unit 101, whereas the biological information processing unit 101 has a reception period corresponding to a timing synchronous with the synchronous signal.

In this state, at a time instant T41, the information processing unit 109 is manipulated so as to transmit a data request signal (ASK) from the transmission/reception unit 110 of the information processing unit 109 to the biological information processing unit 101.

After the biological information processing unit 101, for a reception period beginning with the time instant T41, receives the data request signal in the transmission/reception unit 106, the transmission/reception unit 106 starts to transmit data to the information processing unit 109 at a time instant T42. When the transmission/reception unit 106 transmits the data, the data to be transmitted is divided into three parts having respective predetermined lengths (Log1, Log2, and Log3).

Then, the information processing unit 109, whenever receiving the data having the predetermined length, transmits a verification signal (ACK1, ACK2, ACK3) in a wireless manner to the biological information processing unit 101. The biological information processing unit 101 receives the verification signal transmitted from the information processing unit 109 to thereby judge that the data transmitted the last time was properly received by the information processing unit 109, and transmits the next data having the predetermined length to the information processing unit 109. At a time instant T43, the biological information processing unit 101, transmits a data transmission end signal (Data End) from the transmission/reception unit 106 after end of the transmission of all the data.

After the information processing unit 109 receives the data transmission end signal transmitted from the biological information processing unit 101 and transmits a verification signal (ACK), the information processing unit 109 transmits the synchronous signal (idle) at given intervals to return back to the original communication standby state again.

When the biological information processing unit 101 receives the verification signal at a time instant T44, the biological information processing unit 101 sets in itself the reception period synchronous with the synchronous signal to be synchronized with the information processing unit 109, and returns back to the original communication standby state again.

In a case where data is transmitted from the biological information processing unit 101 to the information processing unit 109 in this communication standby state, the above-mentioned operation is carried out again.

As described above, according to this embodiment mode, in the data transmission system for transmitting the data between the information processing unit 109 and the biological information processing unit 101 each having the communication function, the information processing unit 109 is configured so as to transmit the synchronous signal (idle) at the given intervals of X seconds, and the biological information processing unit 101 is configured so as to have the reception periods which are synchronized with the respective synchronous signals, and which have the same intervals as those of the synchronous signals, and to receive the synchronous signals corresponding to the reception periods. As a result, the synchronization in the communication standby state in which no data transmission is carried out is established.

Consequently, it becomes possible to reduce the power consumption in the information processing unit 109 and the biological information processing unit 101, and also it becomes possible to surely carry out the wireless transmission of the data between the information processing unit 109 and the biological information processing unit 101.

In addition, since the power consumption can be reduced, the communication standby state can be maintained for a long time, and hence a user can carry out the data transmission whenever necessary.

In addition, since there is no need to provide the biological information processing unit 101 with a special mode for communication with the information processing unit 109, it becomes possible to simplify the configuration.

Also, it becomes possible to configure the biological information processing unit 101 as the wearable communication device suitable for the above-mentioned data transmission system.

Note that, as for a method of synchronizing the biological information processing unit 101 and the information processing unit 109 with each other, it is also possible that when the communication means of the biological information processing unit 101 receives the synchronous signal transmitted from the information processing unit 109 by carrying out the scanning operation continuous in terms of time, the communication means sets in itself the reception period corresponding to a timing synchronous with the synchronous signal.

In addition, as another synchronization method, it is also possible that when the communication means receives the synchronous signal by carrying out the scanning operation plural times at the given intervals, the communication means sets in itself the reception period corresponding to a timing synchronous with the synchronous signal.

Also, a data transmitting method may be constituted such that the information processing unit 109 transmits the data request signal (ACK) at a timing synchronous with the synchronous signal, the storage means of the biological information processing unit 101 stores the data to be transmitted, and the communication means, in response to the data request signal received for the reception period, transmits the data stored in the storage means.

Also, it is also possible that after the information processing unit 109 receives the data transmission end signal (Data End) sent from the biological information processing unit 101 and then transmits the verification signal (ACK), the information processing unit 109 transmits the synchronous signal at the given intervals, and after the communication means of the biological information processing unit 101 transmits the data transmission end signal after end of the transmission of the data, and then receives the verification signal, the communication means sets in itself the reception period synchronous with the synchronous signal.

Moreover, in this embodiment mode, as the data transmission system, there has been described an example in which the biological data is transmitted in a wireless manner from the biological information processing unit 101 to the information processing unit 109. However, the present invention may be applied to a data transmission system for transmitting data among electronic apparatuses having other communication functions.

According to the present invention, in a data transmission system for transmitting data among a plurality of electronic apparatuses each having a communication function, it becomes possible to reduce the power consumption of the electronic apparatuses, and to surely carry out data transmission among the electronic apparatuses.

Further, according to the present invention, there can be provided a wearable communication device suitable for the data transmission system.

## Claims

1. A data transmission system comprising:
a first electronic apparatus to transmit a synchronous signal at given intervals;
a second electronic apparatus which has reception periods synchronous with the respective synchronous signals, and which receives the synchronous signal for each of the reception periods.

2. A data transmission system according to claim 1,
wherein the second electronic apparatus comprises communication means for transmitting and receiving a signal in a wireless manner, and storage means for storing therein at least identification information,
wherein the communication means, when receiving the synchronous signal containing therein the identification information stored in the storage means, sets in itself a reception period corresponding to a timing synchronous with the synchronous signal.

3. A data transmission system according to claim 2,
wherein the communication means, when receiving the synchronous signal by carrying out a scanning operation continuous in terms of time, sets in itself a reception period corresponding to a timing synchronous with the synchronous signal.

4. A data transmission system according to claim 2,
wherein the communication means, when receiving the synchronous signal by carrying out a scanning operation plural times at given intervals, sets in itself a reception period corresponding to a timing synchronous with the synchronous signal.

5. A data transmission system according to claim 2,
wherein the first electronic apparatus transmits a data request signal at a timing synchronous with the synchronous signal; the storage means of the second electronic apparatus stores data to be transmitted; and the communication means, in response to the data request signal received for the reception period, transmits the data stored in the storage means.

6. A data transmission system according to claim 5,
wherein the first electronic apparatus, after receiving a data transmission end signal transmitted from the second electronic apparatus and then transmitting a verification signal to the second electronic apparatus, transmits the synchronous signal at the given intervals, and the communication means of the second electronic apparatus, after end of the transmission of the data, transmits the data transmission end signal, and after receiving the verification signal, sets in itself the reception period synchronous with the synchronous signal.

7. A wearable communication device, comprising:
communication means for transmitting and receiving a signal in a wireless manner; and storage means for storing therein at least identification information;
wherein the communication means, when receiving the synchronous signal containing therein the identification information stored in the storage means, sets in itself a reception period corresponding to a timing synchronous with the synchronous signal.

8. A wearable communication device according to claim 7,
wherein the communication means, when receiving the synchronous signal by carrying out a scanning operation continuous in terms of time, sets in itself a reception period corresponding to a timing synchronous with the synchronous signal.

9. A wearable communication device according to claim 7,
wherein the communication means, when receiving the synchronous signal by carrying out a scanning operation plural times at given intervals, sets in itself a reception period corresponding to a timing synchronous with the synchronous signal.

10. A wearable communication device according to claim 7,
wherein the storage means stores data to be transmitted, and the communication means, in response to the data request signal received for the reception period, transmits the data stored in the storage means.

11. A wearable communication device according to claim 10,
wherein the communication means, after end of the transmission of the data, transmits the data transmission end signal, and after receiving the verification signal, sets in itself the reception period synchronous with the synchronous signal.
